Europäisches Patentamt

(19) European Patent Office

Office européen des brevets

(11) EP 0 732 676 B1

## (12) FASCICULE DE BREVET EUROPEEN

(45) Date de publication et mention
de la délivrance du brevet:
**05.09.2001 Bulletin 2001/36**

(51) Int Cl.⁷: **G08G 5/04**, G01C 21/00,
G05D 1/06

(21) Numéro de dépôt: **96400509.4**

(22) Date de dépôt: **12.03.1996**

(54) **Dispositif d'évitement de collisions pour aéronef notamment avec le sol**

Gerät zur Vermeidung von Flugzeugkollisionen , insbesondere mit dem Boden

Apparatus for aircraft collision avoidance particularly with the ground

(84) Etats contractants désignés:
**BE DE FR GB IT**

(30) Priorité: **17.03.1995 FR 9503138**

(43) Date de publication de la demande:
**18.09.1996 Bulletin 1996/38**

(73) Titulaire: **THALES AVIONICS S.A.
78141 Vélizy Villacoublay Cédex (FR)**

(72) Inventeurs:
 • **Denoize, Xavier
 92402 Courbevoie Cedex (FR)**
 • **Faivre, François
 92402 Courbevoie Cedex (FR)**

(74) Mandataire: **Benoit, Monique
Thomson-CSF Propriété Intellectuelle,
13, Avenue du Président Salvador Allende
94117 Arcueil Cédex (FR)**

(56) Documents cités:
 **FR-A- 2 450 443        FR-A- 2 697 796**

 • **PROCEEDINGS OF THE IEEE 1991 NATIONAL
 AEROSPACE AND ELECTRONICS
 CONFERENCE NAECON 1991 (CAT.
 NO.90CH3007-2), DAYTON, OH, USA, 20-24 MAY
 1991, ISBN 0-7803-0085-8, 1991, NEW YORK, NY,
 USA, IEEE, USA, pages 604-610 vol.2,
 XP002006956 HEWITT C ET AL: "A ground and
 obstacle collision avoidance technique
 (GOCAT)"**

**Description**

La présente invention concerne un dispositif d'évitement de collisions pour aéronef notamment avec le sol. Elle s'applique notamment à des avions de lignes. Plus généralement, elle s'applique à tous aéronefs amenés au cours de leur mission à se rapprocher trop près du sol, dans le cas de proximité de montagnes par exemple, ou à évoluer dans des secteurs de l'espace aérien dans lesquels ils représentent un danger ou sont eux-mêmes en danger, dans des zones d'accès interdit par exemple.

Des dispositifs d'évitement de collision entre le sol et des aéronefs sont connus. En particulier, un article PROCEEDINGS OF THE IEEE 1991 NATIONAL AEROSPACE AND ELECTRONICS CONFERENCE NAECON 1991 (CAT. NO. 90CH3007-2), DAYTON, OH, USA, 20-24 MAY 1991, ISBN 0-7803-0085-8, 1991, NEW YORK, NY, USA, IEEE, USA, pages 604-610 vol. 2, XP002006956 HEWITT C ET AL : « A ground and obstacle collision avoidance technique (GOCAT) » expose une technique d'évitement de collision avec le sol. Ces dispositifs se caractérisent principalement par l'utilisation de radioaltimètres, de calculateurs donnant la hauteur barométrique à partir de mesures de pression et de température, et de moyens de navigation tels qu'une centrale à inertie ou un système de gestion du vol. Le principe de ces dispositifs réside dans l'exploitation d'une hauteur altimétrique, prise par rapport au sol, et dans l'exploitation des variations de la hauteur radioaltimétrique ou barométrique. Cette dernière est notamment utilisée à cause de sa disponibilité pour les hauteurs importantes par rapport à la variation de hauteur altimétrique. Ces distances par rapport au sol sont comparées à des valeurs de seuil qui dépendent elles-mêmes des valeurs de hauteurs et de la configuration de l'avion, suivant que son train, ses volets ou ses becs sont sortis par exemple. Lorsque les paramètres mesurés, hauteurs et variations de hauteurs en fonction du temps notamment, dépassent les valeurs de seuils, une alarme est émise à destination de l'équipage. Cependant, de tels dispositifs présentent l'inconvénient de donner des mesures trop tardives par rapport à l'évolution de l'avion donc de générer des alarmes souvent trop tardives, empêchant les équipages de réagir à temps, et susceptibles en conséquence de ne pas empêcher des collisions. Ce fait peut notamment se produire en cas de brusque remontée du relief, quand l'avion se dirige vers le flanc d'une montagne abrupte par exemple. Un autre inconvénient des dispositifs connus est qu'ils génèrent des alarmes injustifiées, encore appelées fausses alarmes. Celles-ci peuvent notamment intervenir quand les avions survolent des montagnes de faible altitude avec une bonne hauteur de sécurité mais où les remontées de relief par exemple, pourtant sans danger, provoquent ces fausses alarmes. Celles-ci diminuent gravement la crédibilité de ces dispositifs anticollision.

Des améliorations ont été apportées à ces derniers, notamment en introduisant des bases de données qui permettent de moduler la valeur des seuils à prendre en compte en fonction de la position géographique des avions. Ces améliorations sont susceptibles de diminuer les fausses alarmes. Cependant, elles nécessitent des bases de données adaptées à chaque type de terrain. Dans la continuité de cette dernière solution, il est envisageable de disposer d'un modèle numérique de terrain qui permettrait de connaître en permanence en fonction de sa position, la nature du relief en amont d'un avion. Néanmoins, l'utilisation d'un tel modèle nécessite une base de données décrivant le relief de façon suffisamment précise, donc demandant des mémoires de grande taille. A cet inconvénient, s'ajoute la nécessité de procédures d'échanges et de mises à jour d'une telle base de données, ce qui complique son utilisation. Le grand nombre d'informations stockées implique par ailleurs des risques d'erreurs non négligeables. La performance de ces dispositifs, notamment en terme d'alarmes nuisibles, est essentiellement liée à la résolution de la base de données. En effet, l'incertitude de mesure sur la position de l'avion doit être prise en compte pour le calcul de l'alarme afin d'éviter toute alarme tardive, ce qui amène à une possibilité d'alarme nuisible.

La Demanderesse a déjà proposé, dans le document FR 2.697.796, un dispositif d'évitement de collisions pour un aéronef palliant les inconvénients précités, notamment en s'affranchissant des aléas de variations de reliefs et en déterminant la position de l'aéronef non plus par rapport au sol, mais par rapport à des altitudes de sécurité connues.

Dans ce document, est décrit un dispositif d'évitement de collisions pour un aéronef comprenant des moyens de localisation géographiques, des moyens calculant, à partir notamment de chaque lieu géographique et d'altitudes de sécurité mémorisées dans une base de données, un plancher de sécurité au-dessus duquel doit se trouver l'aéronef, des moyens de prédiction de la situation aérienne de l'aéronef entre un premier instant donné et un deuxième instant donné, et des moyens de comparaison de la situation aérienne prédite de l'aéronef par rapport au plancher de sécurité.

Lors du fonctionnement, une alarme est par exemple déclenchée dès que le résultat de la comparaison indique qu'une situation aérienne prédite de l'aéronef est en-dessous du plancher.

La présente invention est un perfectionnement du dispositif précédent, permettant d'accroître la résolution des informations utilisées dans les calculs d'alarmes, sans toutefois augmenter le volume de la base de données. Elle permet également de ne plus être tributaire des éventuelles erreurs de mesure de navigation, et donc d'annihiler le risque d'alarme tardive.

Plus précisément, la présente invention a pour objet un dispositif d'évitement de collisions pour un aéronef, du type comprenant des moyens de localisation géographique de l'aéronef, des moyens pour le calcul, pour chaque lieu géographique, d'un plancher de sécurité au-dessus duquel doit se trouver l'aéronef, des moyens de prédiction de la situation aérienne de l'aéronef entre un premier instant donné et un deuxième instant donné, et des moyens de comparaison de la situation aérienne prédite de l'aéronef, par rapport au plancher de sécurité déterminé, et des moyens donnant une altitude de l'aéronef en fonction d'un niveau de référence; le dispositif étant caractérisé en ce qu'il comporte, en outre :

- un capteur situé dans l'aéronef pour détecter des obstacles se trouvant dans un secteur avant de l'aéronef et pour délivrer des mesures à des moyens calculant l'altitude de ces obstacles par rapport audit niveau de référence ;
- des moyens pour modifier le plancher de sécurité déterminé en fonction de l'altitude des obstacles détectés.

Par ailleurs, le dispositif du document FR 2.697.796 permet de calculer des planchers qui peuvent présenter, pour des localisations géographiques, certaines discontinuités. Dans certains cas, l'aéronef peut être amené à passer momentanément sous le niveau du plancher, sans que ce soit pour autant dangereux. Cela produit une alarme qui est nuisible pour l'équipage de l'aéronef.

Une variante d'un dispositif d'évitement de collision selon l'invention est caractérisée en ce que, le plancher de sécurité délivré par les moyens de calcul pouvant présenter une valeur de discontinuité pour une localisation géographique donnée par rapport à des localisations géographiques environnantes, les moyens modifiant le plancher de sécurité calculent une fonction d'interpolation pondérée de la valeur de discontinuité à partir des valeurs du plancher correspondant aux localisations géographiques autour du point de discontinuité et remplacent la valeur de discontinuité par le résultat de la fonction d'interpolation si ce résultat est supérieur à l'altitude d'un obstacle détecté.

L'invention ainsi que les avantages qu'elle procure seront mieux compris au vu de la description suivante faite en référence aux figures annexées dans lesquelles :

- La figure 1 illustre, sous forme de synoptique, un dispositif d'évitement de collision conforme à la présente invention ;
- La figure 2 illustre l'algorithme mis en oeuvre par le dispositif de la figure 1 ;
- La figure 3 représente une situation géographique de l'aéronef détectant un obstacle dans son secteur avant ;
- Les figures 4a à 4c illustrent un exemple de valeurs représentatives d'un plancher de sécurité au cours de l'algorithme de la figure 2 ;
- La figure 5 illustre un exemple de plancher de sécurité présentant une valeur de discontinuité, et d'un plancher de sécurité rendu continu selon l'invention.

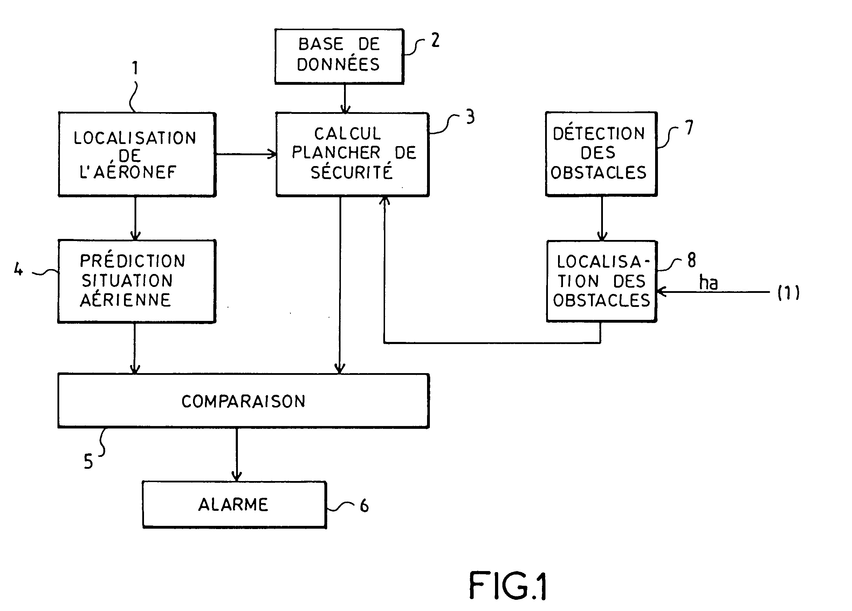

La figure 1 présente un synoptique d'un dispositif d'évitement de collisions selon l'invention :

Il comprend au moins des moyens de localisation 1 de l'aéronef qui le contient, et une base de données 2 mémorisant notamment une description d'altitude de sécurité. Les moyens 1 de localisation de l'aéronef comportent par exemple une centrale de navigation inertielle, un dispositif de localisation/navigation par satellite, et un calculateur de gestion de vol non représentés. L'ensemble fournit également une altitude $h_a$ de l'aéronef, en référence à un niveau de référence $h_{ref}$ prédéterminé, par exemple le niveau moyen des mers ou une ellipsoïde géographique connue.

Les altitudes de sécurité de la base de données 2 sont par exemple définies par rapport au relief des terrains que l'aéronef peut avoir à survoler, par rapport à des zones d'espaces aériens interdites ou par rapport à des procédures de vol ou d'atterrissage. A cet effet, elle contient par exemple une description des balises de navigation relatives à chaque aéroport ainsi que leurs positions géographiques, une description des procédures d'approches pour chaque aéroport et une description des altitudes minimales de sécurité à respecter lorsqu'aucun aéroport n'est à proximité ou lorsque l'aéronef est en croisière.

Des moyens 3, par exemple un calculateur, recevant les informations de localisation géographique et les altitudes de sécurité, calculent alors un plancher de sécurité en-dessous duquel l'aéronef ne doit pas se trouver. On se rapportera notamment au document FR 2.697.796 pour y trouver un exemple d'un tel calcul de plancher de sécurité.

Des moyens 4 de prédiction évaluent, pour un lieu géographique donné par les moyens 1, la situation aérienne de l'aéronef, notamment sa position verticale entre un premier instant $t_o$ donné, qui est par exemple celui de construction du plancher aérien, et un deuxième instant donné $t_o + \Delta t$. Ici encore, on se rapportera au document FR 2.697.796 pour un exemple de constitution de ces moyens de prédiction. Entre chaque construction de planchers, plusieurs prédictions de situations de l'aéronef peuvent être réalisées, notamment à partir de la situation connue de l'aéronef à l'instant $t_o$, et de son vecteur vitesse à cet instant. Des moyens de comparaison 5 reliés aux moyens 3 et 4, et faisant partie par exemple du calculateur, comparent alors la situation prédite de l'aéronef par rapport au plancher aérien construit.

Si cette situation est au-dessus du plancher aérien, l'aéronef est jugé être en sécurité. Dans le cas contraire, un risque de collision est possible. Dans ce cas, une alarme 6, visuelle et/ou sonore, peut être déclenchée en vue d'effectuer une opération d'évitement de collision.

Selon l'invention, le dispositif comporte en outre un capteur 7 permettant de détecter, dans un secteur avant de l'avion, différents obstacles du relief et délivrant des mesures permettant à des moyens 8, faisant par exemple également partie du même calculateur que précédemment, de calculer l'altitude de ces obstacles par rapport au niveau de référence $h_{ref}$ prédéterminé.

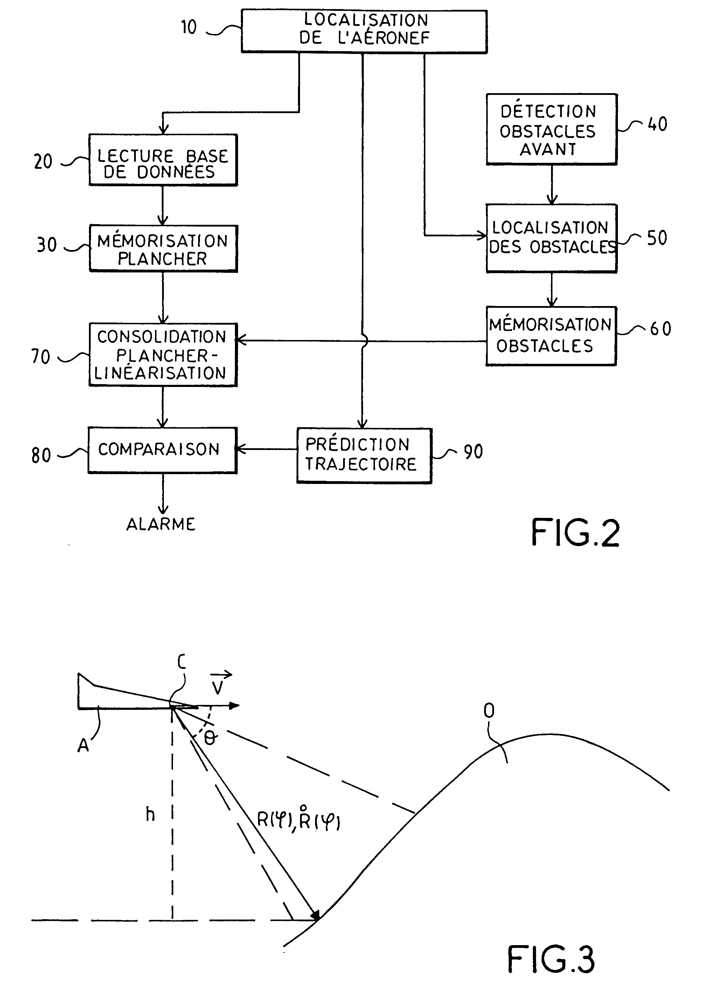

Sur la figure 3, on a représenté un aéronef A, se déplaçant à la vitesse $\vec{V}$ en direction d'un obstacle O du relief. Les mesures fournies par le capteur C sont constituées d'au moins la distance R du capteur à un obstacle, de la vitesse de rapprochement $\dot{R}$ de cet obstacle par rapport à l'aéronef, et de la direction angulaire $\varphi$ en azimut de l'obstacle par rapport à l'horizontale, non visible sur la figure 3. Connaissant ces trois mesures, on peut déterminer la direction en élévation $\theta$ de l'obstacle, qui répond à la relation :

$$\breve{R} = V \cos \theta \cos \varphi$$

On en déduit alors la hauteur h relative par rapport à l'aéronef par le calcul de l'expression :

$$h = \frac{R}{tg\ \theta}$$

Connaissant par ailleurs l'altitude $h_a$ de l'aéronef par rapport au niveau de référence $h_{ref}$, on en déduit l'altitude de l'obstacle par rapport à ce même niveau de référence.

Le capteur utilisé peut être par exemple un radar météorologique ou un lidar. Avantageusement, il peut balayer en azimut un secteur avant de l'aéronef, pouvant par exemple aller de -60° à +60°.

Une fois que les obstacles ont été localisés en altitude, les données obtenues vont pouvoir, selon l'invention, venir modifier si besoin le plancher de sécurité calculé par les moyens 3, de manière à consolider ce plancher.

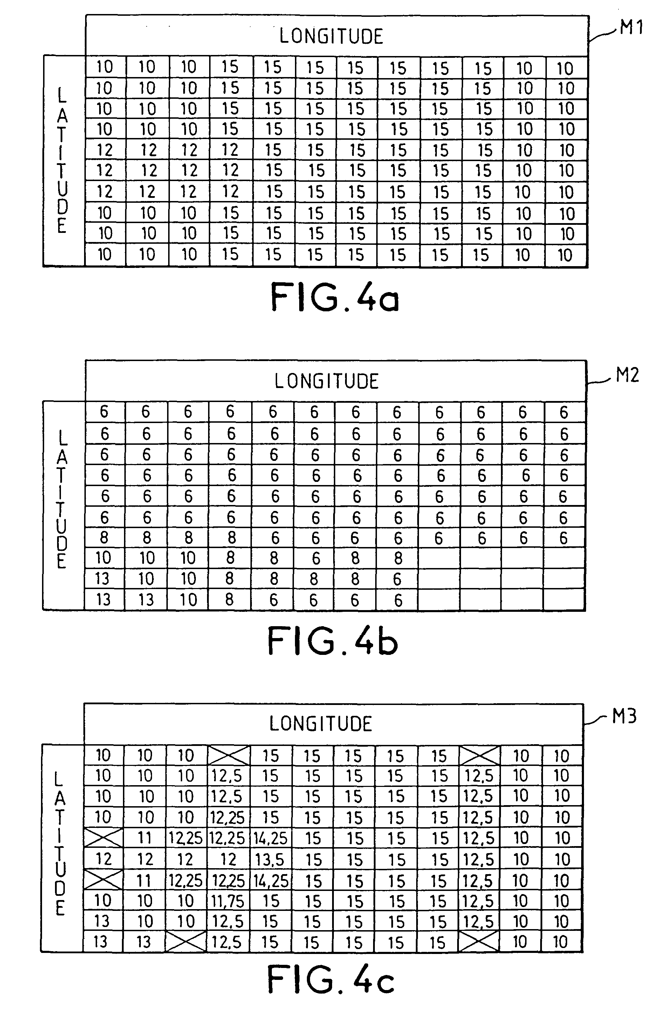

En référence à la figure 2 et aux figures 4a à 4c, on décrit à présent un algorithme mis en oeuvre par le dispositif de la figure 1 :

On localise tout d'abord en 10 l'aéronef en fonction de la position fournie par les éléments de navigation, puis on effectue en 20 une lecture de la base de données de manière à déterminer les planchers de sécurité. On peut par exemple stocker en 30 dans une mémoire M1, organisée géographiquement en latitude et en longitude, la hauteur minimale des planchers de sécurité. La figure 4a illustre un exemple de contenu de la mémoire M1, le nombre 10 correspondant à une altitude de 1000 pieds. Dans le rafraîchissement de cette mémoire M1, on s'arrange de préférence pour que les données relatives à l'altitude de sécurité autour de l'aéronef soient sensiblement au centre de la mémoire M1.

Par ailleurs, le capteur de l'aéronef détecte en 40 les obstacles dans un secteur avant de l'aéronef, et permet au calculateur de localiser en 50 ces obstacles en altitude. Le calculateur conserve en 60 dans une mémoire M2 la cartographie des obstacles ainsi acquis avec leur altitude correspondante. Cette mémoire peut par exemple être organisée géographiquement de la même manière que la mémoire M1. La figure 4b illustre un exemple de contenu de la mémoire M2, éventuellement augmentée d'une marge de sécurité. On remarque que certaines cases de la mémoire peuvent ne rien contenir si rien n'a été détecté aux positions géographiques correspondantes. Les deux mémoires M1 et M2 sont ainsi constamment remises à jour en fonction des évolutions de l'aéronef, et contiennent les informations relatives aux planchers de sécurité et aux obstacles devant l'aéronef.

L'étape 70 de consolidation du plancher de sécurité selon l'invention s'effectue de la manière suivante :

Le calculateur établit la comparaison entre les informations contenues dans la mémoire M1 et celles contenues dans la mémoire M2. Par définition des planchers de sécurité, toute valeur contenue dans la mémoire M1 devrait être supérieure à la valeur de la mémoire M2 correspondant à la même situation géographique. Si tel est bien le cas, on conserve dans une mémoire M3 la valeur de la mémoire M1, ce qui signifie que l'on valide la valeur du plancher de sécurité pour cette localisation géographique. Dans le cas contraire, il faut réajuster, selon l'invention, la valeur du plancher de sécurité, en plaçant dans la mémoire M3 non pas la valeur de la mémoire M1, mais celle de la mémoire M2, éventuellement augmentée d'une marge de sécurité. Ces opérations se résument en fait à remplacer la valeur du plancher par le maximum des valeurs contenues dans les cases des mémoires M1 et M2, c'est-à-dire par le maximum entre la valeur du plancher et l'altitude d'un obstacle détecté, et à la mémoriser dans la mémoire M3. Sur la figure 4c, on a représenté le contenu de la mémoire M3 résultant de ces opérations effectuées à partir des mémoires M1 et M2 des figures 4a et 4b, dans le cas où la marge de sécurité est prise égale à zéro. Mis à part pour certaines cases de la quatrième et de la dixième colonnes, toutes les cases contiennent bien le maximum entre la valeur de la mémoire M1 et celle de la mémoire M2.

L'opération effectuée sur des cases particulières de certaines colonnes fait partie d'une variante particulièrement intéressante du dispositif selon l'invention :

Nous avons vu précédemment que les planchers calculés pouvaient présenter des valeurs de discontinuités pour une localisation donnée par rapport à des localisations précédentes génératrices d'alarmes nuisibles. Dans le cas de la figure 4a, la mémoire M1 fait état de valeurs de discontinuités au niveau des quatre premières cases et des trois dernières cases de la quatrième colonne, où l'altitude passe de 1000 à 1500 pieds, et au niveau de la dixième colonne, où l'altitude passe de 1500 à 1000 pieds.

Au moment de l'étape 70 de consolidation de plancher, l'invention propose également de supprimer, lorsque cela est possible, ces discontinuités.

On propose ci-après un algorithme possible pour supprimer ces discontinuités :

On note M1(i,j) la case de la mémoire M1 située à l'intersection de la ligne i et de la colonne j. On part de l'hypothèse que M1 (i, j) est supérieure à M2 (i, j)

Si

$$M1(i,j) \neq M1(i-1,j)$$

ou si

$$M1(i,j) \neq M1(i,j-1)$$

alors, on calcule l'expression :

$$M'1 (i, j) = F [M1 (i-1, j-1), M1 (i+1, j-1), M1 (i-1, j+1), M1 (i+1,j+1)]$$

fonction d'interpolation pondérée de la valeur de discontinuité M1(i,j) à partir des valeurs du plancher correspondant aux localisations géographiques avoisinantes

et où F est par exemple une fonction bilinéaire du type

$$F (x, y, z, w) = k_1 k_2 x + k_1 (1-k_2)y + (1-k_1)k_2 z + (1-k_1) (1-k_2)w$$

dans laquelle $k_1$ et $k_2$ sont des coefficients de pondération.

Si la quantité M'1(i,j) obtenue reste supérieure à M2(i,j), et inférieure à M1 (i,j) alors on l'identifie à M3(i,j) :

$$M3 (i,j) = M'1 (i,j)$$

Sinon, on conserve la valeur initiale M1 (i,j) dans la mémoire M3 :

$$M3 (i,j) = M1 (i,j)$$

L'expression mathématique de M3 (i,j) est donc :

$$M3(i,j) = Sup (M2(i,j), Inf (M1(i,j), M'1 (i,j)))$$

Considérons par exemple la case M1 (2, 4) sur la figure 4a.

On a bien :

$$M1 (2, 4) > M2 (2, 4)$$

Par ailleurs

$$M1(1, 3)=10, M1(3, 3)=10, M1(1, 5)=15, et M1(3, 5)=15$$

$$et\ k_1 = k_2 = 1/2.$$

On calcule donc :

$$M'1 (2, 4) = 12,5.$$

Cette valeur est encore supérieure à M2 (2, 4). On la mémorise donc dans la mémoire M3 (voir figure 4c). Sur la figure 4c, on peut voir que certaines cases comportent des croix. Leur valeur ne peut être connue à l'instant courant car on ne dispose pas de tous les points avoisinants. Par ailleurs, pour certaines cases, on trouve une valeur M'1 (i,j) supérieure à la valeur initiale M1(i,j). C'est le cas par exemple des points M3(5,3), M3(5,4), M7(5,3) et M7(5,4). On conserve alors dans la mémoire M3 la valeur initiale M1(i,j).

D'autres exemples de fonctions d'interpolation prenant en compte un plus ou moins grand nombre de valeurs de plancher correspondant à des localisations géographiques précédentes, peuvent bien entendu être appliqués sans sortir du cadre de la présente invention.

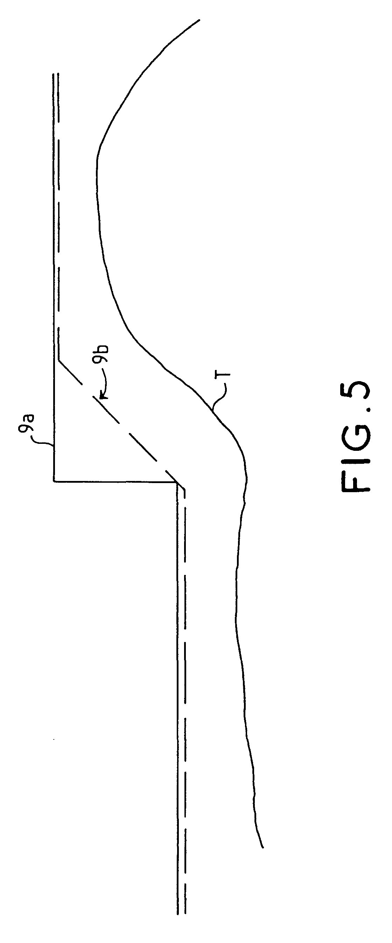

Sur la figure 5, on a représenté, en trait continu, un exemple d'un plancher de sécurité 9a pouvant être délivré par les moyens de calcul 3 pour le survol d'un terrain T avant passage dans l'algorithme de suppression des discontinuités, et, en traits pointillés, le plancher de sécurité 9b obtenu après suppression des discontinuités.

Une fois que le plancher de sécurité a été consolidé, et, éventuellement rendu continu, ce dernier est, comme le montre la figure 2, comparé en 80 avec la situation prédite en 90 de l'aéronef afin de déclencher, si nécessaire, l'alarme.

Les améliorations apportées par le présent dispositif conformément à l'invention par rapport au dispositif du document FR 2.697.796 permettent par conséquent non seulement d'annihiler le risque d'alarme tardive liée aux erreurs de mesure de navigation mais aussi, dans sa variante préférée, de réduire le taux d'alarmes nuisibles ou la durée de l'alarme une fois que la manoeuvre d'évitement d'obstacle est amorcée en rendant continus les planchers de sécurité.

## Revendications

**1.** Dispositif d'évitement de collisions pour un aéronef, du type comprenant des moyens (1) de localisation géographique de l'aéronef, des moyens (2, 3) pour le calcul, pour chaque lieu géographique, d'un plancher de sécurité au-dessus duquel doit se trouver l'aéronef, des moyens (4) de prédiction de la situation aérienne de l'aéronef entre un premier instant donné et un deuxième instant donné, des moyens de comparaison (5) de la situation aérienne prédite de l'aéronef, par rapport au plancher de sécurité déterminé, et des moyens (1) donnant une altitude de l'aéronef en fonction d'un niveau de référence ;

le dispositif étant **caractérisé en ce qu'**il comporte, en outre :

- un capteur (7) situé dans l'aéronef, pour détecter des obstacles se trouvant dans un secteur avant de l'aéronef et pour délivrer des mesures à des moyens (8) calculant l'altitude de ces obstacles par rapport audit niveau de référence ;
- des moyens (3) pour modifier le plancher de sécurité déterminé en fonction de l'altitude des obstacles détectés.

**2.** Dispositif d'évitement de collisions selon la revendication 1, **caractérisé en ce que** le capteur délivre au moins la distance R du capteur à un obstacle détecté, la vitesse de rapprochement $R$ de cet obstacle et la direction angulaire φ en azimut, par rapport à l'horizontale, de l'obstacle, et en ce que l'altitude de l'obstacle est déterminée en calculant d'abord une hauteur relative par rapport à l'aéronef, puis en déduisant ladite altitude de la hauteur relative et de l'altitude de l'aéronef.

**3.** Dispositif d'évitement de collisions selon la revendication 2, **caractérisé en ce que** la hauteur relative est donnée par l'expression

$$\frac{R}{tg\ \theta}$$

où θ est la direction angulaire en élévation de l'obstacle détecté.

**4.** Dispositif d'évitement de collisions selon la revendication 3, **caractérisé en ce que** la direction angulaire en élévation θ est déterminée par la vitesse V de l'aéronef, la direction angulaire en azimut φ et la vitesse de rapprochement $R$ de l'obstacle, selon la relation :

$$R = \overset{\cdot}{V} \cos \theta \cos \varphi$$

**5.** Dispositif d'évitement de collisions selon l'une quelconque des revendications précédentes, **caractérisé en ce que** le plancher de sécurité est modifié en remplaçant, pour chaque localisation géographique, la valeur du plancher par le maximum entre la valeur du plancher et l'altitude d'un obstacle détecté.

**6.** Dispositif d'évitement de collisions selon l'une quelconque des revendications précédentes, **caractérisé en ce que**, le plancher de sécurité délivré par les moyens de calcul (3) pouvant présenter une valeur de discontinuité pour une localisation géographique donnée par rapport à des localisations géographiques environnantes, les moyens modifiant le plancher de sécurité calculent une fonction d'interpolation pondérée de la valeur de discontinuité à partir des valeurs du plancher correspondant aux localisations géographiques précédentes et remplacent la valeur de discontinuité par le résultat de la fonction d'interpolation si ce résultat est supérieur à l'altitude d'un obstacle détecté.

**7.** Dispositif d'évitement de collisions selon la revendication 6, **caractérisé en ce que** la fonction d'interpolation est une fonction bilinéaire.

**8.** Dispositif d'évitement de collisions selon l'une quelconque des revendications précédentes, **caractérisé en ce que** le capteur est un radar météorologique.

**9.** Dispositif d'évitement de collisions selon l'une quelconque des revendications 1 à 7, **caractérisé en ce que** le capteur est un lidar.

**10.** Dispositif d'évitement de collisions selon l'une quelconque des revendications précédentes, **caractérisé en ce que** le capteur réalise un balayage en azimut du secteur avant de l'aéronef.

**Patentansprüche**

**1.** Kollisionsvermeidungsvorrichtung für ein Flugzeug, die von dem Typ ist, der Mittel (1), die das Flugzeug geographisch lokalisieren, Mittel (2, 3), die eine Sicherheitsmindestgrenze, oberhalb derer sich das Flugzeug befinden muß, für jeden geographischen Ort berechnen, Mittel (4), die die Flugsituation des Flugzeugs zwischen einem ersten gegebenen Zeitpunkt und einem zweiten gegebenen Zeitpunkt vorhersagen, Mittel (5), die die vorhergesagte Flugsituation des Flugzeugs mit der bestimmten Sicherheitsmindestgrenze vergleichen, sowie Mittel (1), die eine Absoluthöhe des Flugzeugs in Abhängigkeit von einem Referenzniveau angeben, umfaßt; wobei die Vorrichtung **dadurch gekennzeichnet** ist, daß sie außerdem umfaßt:

- einen Sensor (7), der sich im Flugzeug befindet, um Hindernisse zu erfassen, die sich in einem vor dem Flugzeug befindlichen Sektor befinden, und um Meßwerte an Mittel (8) zu liefern, die die Absoluthöhe dieser Hindernisse in bezug auf das Referenzniveau berechnen;
- Mittel (3), die die bestimmte Sicherheitsmindestgrenze in Abhängigkeit von der Absoluthöhe der erfaßten Hindernisse modifizieren.

**2.** Kollisionsvermeidungsvorrichtung nach Anspruch 1, **dadurch gekennzeichnet**, daß der Sensor wenigstens den Abstand R des Sensors zu einem erfaßten Hindernis, die Annäherungsgeschwindigkeit R dieses Hindernisses und die Azimutwinkelrichtung $\varphi$ in bezug auf die Horizontale dieses Hindernisses liefert und daß die Absoluthöhe des Hindernisses dadurch bestimmt wird, daß zunächst eine relative Höhe in bezug auf das Flugzeug berechnet wird und daß dann die Absoluthöhe aus der relativen Höhe und aus der Flugzeugabsoluthöhe abgeleitet wird.

**3.** Kollisionsvermeidungsvorrichtung nach Anspruch 2, **dadurch gekennzeichnet**, daß die relative Höhe gegeben ist durch den Ausdruck

$$\frac{R}{\tan \theta}$$

wobei $\theta$ die Höhenwinkelrichtung des erfaßten Hindernisses ist.

**4.** Kollisionsvermeidungsvorrichtung nach Anspruch 3, **dadurch gekennzeichnet**, daß die Höhenwinkelrichtung $\theta$ durch die Geschwindigkeit V des Flugzeugs, die Azimutwinkelrichtung $\varphi$ und die Annäherungsgeschwindigkeit $\dot{R}$ des Hindernisses entsprechend der Beziehung

$$\dot{R} = V \cos \theta \cos \varphi$$

bestimmt wird.

**5.** Kollisionsvermeidungsvorrichtung nach einem der vorhergehenden Ansprüche, **dadurch gekennzeichnet**, daß die Sicherheitsmindestgrenze dadurch modifiziert wird, daß für jeden geographischen Ort der Wert der Mindestgrenze durch das Maximum zwischen dem Wert der Mindestgrenze und der Absoluthöhe eines erfaßten Hindernisses ersetzt wird.

**6.** Kollisionsvermeidungsvorrichtung nach einem der vorhergehenden Ansprüche, **dadurch gekennzeichnet**, daß die die Sicherheitsmindestgrenze modifizierenden Mittel, da die von den Rechenmitteln (3) gelieferte Sicherheitsmindestgrenze für einen gegebenen geographischen Ort in bezug auf umgebende geographische Orte einen unstetigen Wert besitzen kann, eine gewichtete Interpolationsfunktion des Unstetigkeitswertes anhand der Werte der Mindestgrenze, die den vorhergehenden geographischen Orten entsprechen, berechnen und den Unstetigkeitswert durch das Ergebnis der Interpolationsfunktion ersetzen, wenn dieses Ergebnis größer als die Absoluthöhe eines erfaßten Hindernisses ist.

**7.** Kollisionsvermeidungsvorrichtung nach Anspruch 6, **dadurch gekennzeichnet**, daß die Interpolationsfunktion eine bilineare Funktion ist.

**8.** Kollisionsvermeidungsvorrichtung nach einem der vorhergehenden Ansprüche, **dadurch gekennzeichnet**, daß der Sensor ein meteorologischer Radar ist.

**9.** Kollisionsvermeidungsvorrichtung nach einem der Ansprüche 1 bis 7, **dadurch gekennzeichnet**, daß der Sensor ein LIDAR ist.

**10.** Kollisionsvermeidungsvorrichtung nach einem der vorhergehenden Ansprüche, **dadurch gekennzeichnet**, daß der Sensor eine Azimutabtastung des vor dem Flugzeug befindlichen Sektors ausführt.

**Claims**

**1.** Collision avoidance device for an aircraft, of the type comprising means (1) of geographical location of the aircraft, means (2, 3) for computing, for each geographical place, a safety floor above which the aircraft must lie, means (4) for predicting the aerial situation of the aircraft between a first given instant and a second given instant, means (5) for comparing the predicted aerial situation of the aircraft with respect to the specified safety floor, and means (1) giving an altitude of the aircraft as a function of a reference level;
the device being **characterized in that** it furthermore comprises;

- a sensor (7) situated in the aircraft, for detecting obstacles lying in a sector forward of the aircraft and for delivering measurements to means (8) computing the altitude of these obstacles with respect to the said reference level;
- means (3) for modifying the specified safety floor as a function of the altitude of the obstacles detected.

**2.** Collision avoidance device according to Claim 1, **characterized in that** the sensor delivers at least the distance R from the sensor to a detected obstacle, the speed of approach R to this obstacle and the azimuthal angular direction $\varphi$, with respect to the horizontal, of the obstacle, and in that the altitude of the obstacle is determined by firstly computing a relative height with respect to the aircraft, then by deducing the said altitude from the relative height and from the altitude of the aircraft.

**3.** Collision avoidance device according to Claim 2, **characterized in that** the relative height is given by the expression

$$\frac{R}{\tan\theta}$$

where θ is the elevational angular direction of the obstacle detected.

4. Collision avoidance device according to Claim 3, **characterized in that** the elevational angular direction θ is determined by the speed V of the aircraft, the azimuthal angular direction φ and the speed of approach R to the obstacle, according to the relation:

$$\dot{R} = V\cos\theta\cos\varphi$$

5. Collision avoidance device according to any one of the preceding claims, **characterized in that** the safety floor is modified by replacing, for each geographical location, the value of the floor by the maximum between the value of the floor and the altitude of a detected obstacle.

6. Collision avoidance device according to any one of the preceding claims, **characterized in that**, the safety floor delivered by the computing means (3) being able to exhibit a discontinuity value for a given geographical location with respect to surrounding geographical locations, the means modifying the safety floor compute a weighted interpolation function of the discontinuity value on the basis of the values of the floor corresponding to the previous geographical locations and replace the discontinuity value by the result of the interpolation function if this result is greater than the altitude of a detected obstacle.

7. Collision avoidance device according to Claim 6, **characterized in that** the interpolation function is a bilinear function.

8. Collision avoidance device according to any one of the preceding claims, **characterized in that** the sensor is a meteorological radar.

9. Collision avoidance device according to any one of Claims 1 to 7, **characterized in that** the sensor is a lidar.

10. Collision avoidance device according to any one of the preceding claims, **characterized in that** the sensor carries out an azimuthal scan of the sector forward of the aircraft.

FIG.1

10 — LOCALISATION DE L'AÉRONEF

DÉTECTION OBSTACLES AVANT — 40

20 — LECTURE BASE DE DONNÉES

30 — MÉMORISATION PLANCHER

LOCALISATION DES OBSTACLES — 50

70 — CONSOLIDATION PLANCHER-LINÉARISATION

MÉMORISATION OBSTACLES — 60

80 — COMPARAISON

PRÉDICTION TRAJECTOIRE — 90

ALARME

FIG.2

FIG.3

| | LONGITUDE | | | | | | | | | | | |
|---|---|---|---|---|---|---|---|---|---|---|---|---|
| **LATITUDE** | 10 | 10 | 10 | 15 | 15 | 15 | 15 | 15 | 15 | 15 | 10 | 10 |
| | 10 | 10 | 10 | 15 | 15 | 15 | 15 | 15 | 15 | 15 | 10 | 10 |
| | 10 | 10 | 10 | 15 | 15 | 15 | 15 | 15 | 15 | 15 | 10 | 10 |
| | 10 | 10 | 10 | 15 | 15 | 15 | 15 | 15 | 15 | 15 | 10 | 10 |
| | 12 | 12 | 12 | 12 | 15 | 15 | 15 | 15 | 15 | 15 | 10 | 10 |
| | 12 | 12 | 12 | 12 | 15 | 15 | 15 | 15 | 15 | 15 | 10 | 10 |
| | 12 | 12 | 12 | 12 | 15 | 15 | 15 | 15 | 15 | 15 | 10 | 10 |
| | 10 | 10 | 10 | 15 | 15 | 15 | 15 | 15 | 15 | 15 | 10 | 10 |
| | 10 | 10 | 10 | 15 | 15 | 15 | 15 | 15 | 15 | 15 | 10 | 10 |
| | 10 | 10 | 10 | 15 | 15 | 15 | 15 | 15 | 15 | 15 | 10 | 10 |

M1

## FIG.4a

| | LONGITUDE | | | | | | | | | | | |
|---|---|---|---|---|---|---|---|---|---|---|---|---|
| **LATITUDE** | 6 | 6 | 6 | 6 | 6 | 6 | 6 | 6 | 6 | 6 | 6 | 6 |
| | 6 | 6 | 6 | 6 | 6 | 6 | 6 | 6 | 6 | 6 | 6 | 6 |
| | 6 | 6 | 6 | 6 | 6 | 6 | 6 | 6 | 6 | 6 | 6 | 6 |
| | 6 | 6 | 6 | 6 | 6 | 6 | 6 | 6 | 6 | 6 | 6 | 6 |
| | 6 | 6 | 6 | 6 | 6 | 6 | 6 | 6 | 6 | 6 | 6 | 6 |
| | 6 | 6 | 6 | 6 | 6 | 6 | 6 | 6 | 6 | 6 | 6 | 6 |
| | 8 | 8 | 8 | 8 | 6 | 6 | 6 | 6 | 6 | 6 | 6 | 6 |
| | 10 | 10 | 10 | 8 | 8 | 6 | 8 | 8 | | | | |
| | 13 | 10 | 10 | 8 | 8 | 8 | 8 | 6 | | | | |
| | 13 | 13 | 10 | 8 | 6 | 6 | 6 | 6 | | | | |

M2

## FIG.4b

| | LONGITUDE | | | | | | | | | | | |
|---|---|---|---|---|---|---|---|---|---|---|---|---|
| **LATITUDE** | 10 | 10 | 10 | ✕ | 15 | 15 | 15 | 15 | 15 | ✕ | 10 | 10 |
| | 10 | 10 | 10 | 12,5 | 15 | 15 | 15 | 15 | 15 | 12,5 | 10 | 10 |
| | 10 | 10 | 10 | 12,5 | 15 | 15 | 15 | 15 | 15 | 12,5 | 10 | 10 |
| | 10 | 10 | 10 | 12,25 | 15 | 15 | 15 | 15 | 15 | 12,5 | 10 | 10 |
| | ✕ | 11 | 12,25 | 12,25 | 14,25 | 15 | 15 | 15 | 15 | 12,5 | 10 | 10 |
| | 12 | 12 | 12 | 12 | 13,5 | 15 | 15 | 15 | 15 | 12,5 | 10 | 10 |
| | ✕ | 11 | 12,25 | 12,25 | 14,25 | 15 | 15 | 15 | 15 | 12,5 | 10 | 10 |
| | 10 | 10 | 10 | 11,75 | 15 | 15 | 15 | 15 | 15 | 12,5 | 10 | 10 |
| | 13 | 10 | 10 | 12,5 | 15 | 15 | 15 | 15 | 15 | 12,5 | 10 | 10 |
| | 13 | 13 | ✕ | 12,5 | 15 | 15 | 15 | 15 | 15 | ✕ | 10 | 10 |

M3

## FIG.4c

FIG.5

EP 0 732 676 B1